# EUROPEAN PATENT APPLICATION

(11) **EP 3 861 859 A2**
(43) Date of publication of application: **11.08.2021**
(21) Application number: 20759617.2
(22) Date of filing: 17.02.2020
(51) Int. Cl.: A21C 15/04, B26D 7/08

(54) **ULTRASONIC BREAD CUTTER**

(30) Priority: 18.02.2019 KR 20190018507
(71) Applicant: Song, Cheoul Kyu, Gangseo-gu Seoul 07555 (KR)
(72) Inventor: Song, Cheoul Kyu, Gangseo-gu Seoul 07555 (KR)
(74) Representative: reuteler & cie SA
(86) International application number: PCT/KR2020/002238
(87) International publication number: WO 2020/171508

(57) **Abstract**

Proposed is an ultrasonic bread cutter, in which high-frequency electrical energy is converted into mechanical energy by an ultrasonic unit and bread is cut by ultrasonic vibration of a cutting knife. The ultrasonic bread cutter according to an embodiment includes the ultrasonic unit configured to convert high-frequency electrical energy into the mechanical energy; and the cutting knife configured to cut bread by transmitting the mechanical vibration of the mechanical energy to the bread while passing through the bread.

## Description

### Technical Field

The present disclosure relates generally to an ultrasonic bread cutter. More particularly, the present disclosure relates to an ultrasonic bread cutter, in which high-frequency electrical energy is converted into mechanical energy by an ultrasonic unit and bread is cut by the ultrasonic vibration of a cutting knife.

### Background Art

Generally, bread as a substitute for a meal is a food made by kneading flour as a main ingredient and baking or steaming the kneaded flour.

Bread may be sold in a form in which the bread is baked or steamed, but recently, the bread is processed in various forms and sold so as to differentiate the bread from bread of competitors. Accordingly, devices for processing bread into various forms are actively being developed.

A bread cutter is installed at a factory or bakery which produces a large amount of bread, and is used to cut bread, which has predetermined length such as a roll cake or plain bread formed into a loaf, into pieces of bread having predetermined sizes for a consumer to conveniently eat.

When bread is cut by a cutting knife of such a bread cutter, the cut surface of the bread is pushed and becomes uneven due to softness of the bread, so a heart-shaped cake as an example is made by pouring bread dough in a heat-shaped mold, which leads to low productivity.

In addition, when bread containing additions such as nuts or raisins is cut, these additions are pushed without being cut.

AS a substitute for such a cutting knife, a water jet cutter was used in the past. The water jet cutter cuts bread by using ultra-high pressure water spraying through a nozzle having a very tiny hole.

Accordingly, in the prior art, bread is cut by an expensive water jet cutter using water, so there are the following problems.

First, the conventional water jet cutter costs at least 150 million Korean won per unit, which is very expensive.

Second, in the conventional water jet cutting method, bread is cut by spraying sterilized water at ultra-high pressure, and thus is in contact with the water, which causes hygiene concerns.

Third, in the conventional water jet cutting method, bread is required to be placed on a wire mesh inside a machine and after the bread is cut, the bread is required to be taken out from the machine, so the conventional water jet cutting method is disadvantageous for transferring and packaging the bread.

Fourth, in the conventional water jet cutting method, due to water spraying at high pressure, a nozzle of the water jet cutter may be blocked, and management of a high pressure pump and replacement of a wire mesh of a base are required, which makes maintenance difficult.

Fifth, in the conventional water jet cutting method, bread is cut by water spraying, and thus bread crumbs as thick as the water spraying are produced, so after the bread is cut, the crumbs fall under a machine, which may make environment around the machine unclean and contaminates the entirety of the machine.

Sixth, the conventional water jet cutter produces loud noise during operation, and moisture continuously remains therein, which creates a humid environment not suitable for a food company.

Seventh, in the water jet cutting method, bread is cut to have an uneven surface.

### Disclosure

### Technical Problem

The present disclosure has been made keeping in mind the above problems occurring in the prior art, and is intended to propose an ultrasonic bread cutter, in which high-frequency electrical energy is converted into mechanical energy by an ultrasonic unit and bread is cut by ultrasonic vibration of a cutting knife so as to provide an inexpensive ultrasonic bread cutter enabling the bread to be cut to have a curved surface and hygienically having no problem.

### Technical Solution

In order to accomplish the above objectives, an ultrasonic bread cutter according to an embodiment of the present disclosure includes an ultrasonic unit configured to convert high-frequency electrical energy into mechanical energy; and a cutting knife configured to cut bread by transmitting mechanical vibration of the mechanical energy to the bread while passing through the bread.

In addition, the bread cutter may further include: an ultrasonic oscillator configured to convert electrical energy having frequency of 50∼60Hz into high-powered energy having high frequency and supplying the high-powered energy having the high frequency to the ultrasonic unit,

wherein the ultrasonic unit may include: a vibrator converting the high-frequency electrical energy supplied by the ultrasonic oscillator into a mechanical energy of vertical vibration; and a horn configured to obtain amplitude which the cutting knife requires when cutting the bread.

Furthermore, the high frequency of the ultrasonic oscillator may be 15∼30KHz, and length of the cutting knife may be 30∼60mm.

Additionally, the ultrasonic unit and the cutting knife may be mounted to an XYZ-axis unit, and may be capable of moving in X-axis (left and right), Y-axis (forward and backward), and Z-axis (vertically) directions, and

an X-axis unit may be installed at a side of a base on which the bread is laid such that the X-axis unit moves left and right; an XY-axis unit may be installed at the X-axis unit such that the XY-axis unit moves forward and backward; and the XYZ-axis unit may be installed at the XY-axis unit such that the XYZ-axis unit moves vertically.

In addition, the cutting knife may be coupled to a rotating motor and cut the bread while rotating in a direction of a blade of the cutting knife.

### Advantageous Effects

According to the above-described technical solution in which the ultrasonic unit converts the high-frequency electrical energy into the mechanical energy and bread is cut by the ultrasonic vibration of the cutting knife, the following effects can be obtained.

First, an inexpensive ultrasonic cutter enabling bread to be cut to have a curved surface and costing about 50 million won, which is several times cheaper than a conventional water jet cutter which costs at least 150 million Korean won per unit, can be manufactured and provided.

Second, in the ultrasonic cutting method of the present disclosure, bread is cut by ultrasonic vibration (for example, the frequency of 20KHz) of a clean cutting knife, which causes no hygienic problem.

Third, in the ultrasonic cutting method of the present disclosure, a plate on which bread is placed can be raised, and it is possible to place bread directly on a plate for packaging and take out the bread including the plate to be introduced to a packaging line, thereby facilitating the transferring and packaging of the bread.

Fourth, in the ultrasonic cutting method of the present disclosure, the blocking of a nozzle occurring in the conventional water jet cutting method is prevented, and management of a high pressure pump and the replacement of the wire mesh of the base are not required, thereby realizing inexpensive and simple maintenance.

Fifth, in the ultrasonic cutting method of the present disclosure, when bread is cut, the occurrence of crumbs is minimized, and dry cutting of the bread is performed, thereby facilitating the cleaning and management of the ultrasonic bread cutter.

Sixth, in the ultrasonic cutting method of the present disclosure, there is little mechanical noise and due to the dry cutting, an environment in which bread is cut is not changed to a humid environment.

Seventh, in the ultrasonic cutting method of the present disclosure, bread is cut to have a smooth surface.

### Description of Drawings

FIG. 1 is a block diagram of an ultrasonic bread cutter according to an embodiment of the present disclosure.
FIG. 2 is a front view of the ultrasonic bread cutter according to the embodiment of the present disclosure.
FIG. 3 is a side view of FIG. 2.
FIG. 4 is a top plan view of FIG. 2.

### Mode for Invention

Hereinbelow, the configuration and operation of an ultrasonic bread cutter according to an embodiment of the present disclosure will be described with reference to the accompanying drawings.

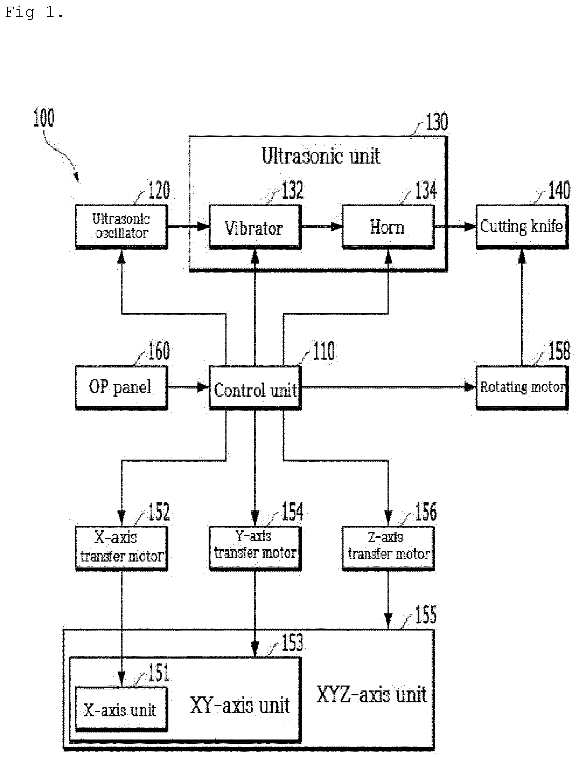

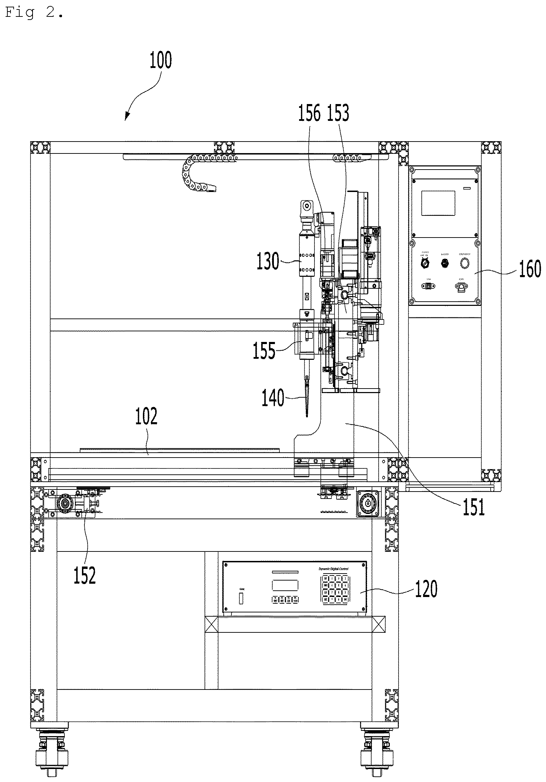

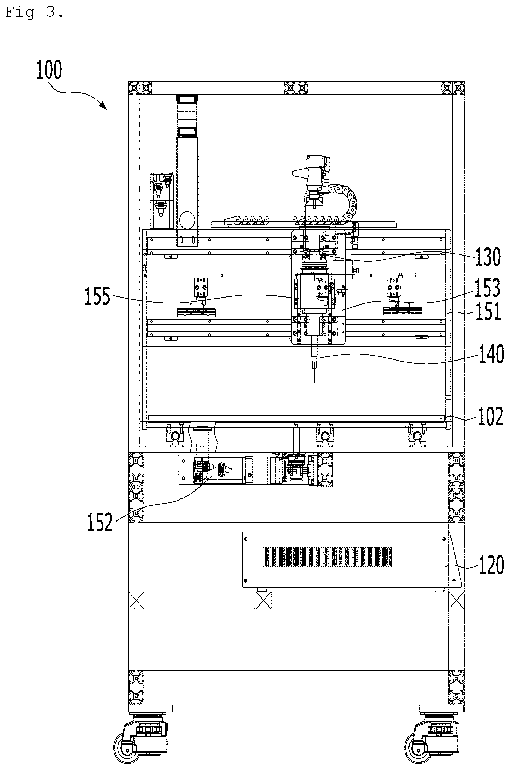

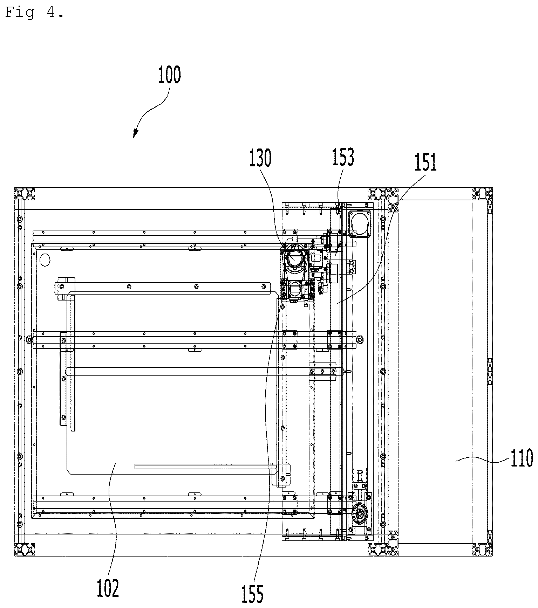

FIG. 1 is a block diagram of the ultrasonic bread cutter according to the embodiment of the present disclosure, FIG. 2 is a front view of the ultrasonic bread cutter according to the embodiment of the present disclosure, FIG. 3 is a side view of FIG. 2, and FIG. 4 is a top plan view of FIG. 2.

In the ultrasonic bread cutter 100 according to the embodiment of the present disclosure, the electrical energy having ultrasound (high frequency) is converted into mechanical energy of vertical movement by an ultrasonic unit 130; the mechanical vibration which is the mechanical energy is transmitted to a cutting knife 140, and the cutting knife cuts through bread by using the mechanical vibration.

Ultrasound is a type of a sound wave and normally has excessive frequency of 20KHz or more, and thus cannot be discerned by human hearing.

Ultrasound has essentially the same properties as a sound wave in an audible range, but has properties in contrast to the properties of normal audible sound wave, such as excessive vibration occurring due to a short wavelength, so ultrasound has various applications.

For example, ultrasound is applied to a sonar (sound navigation and ranging) measuring the depth of water, and to an ultrasonic flaw detector which detects damage within a structure by measuring difference in rate of the ultrasound absorbed by the structure or in propagation speed of the ultrasound in the structure.

An ultrasonic oscillator 120 is a device converting the electrical energy having the frequency of 50∼60Hz into high-powered energy having high frequency (15∼30KHz) and supplying the high-powered energy having high frequency to a vibrator of the ultrasonic unit.

When an OP panel 160 is manipulated, a control unit 110 adjusts the cutting condition of an ultrasonic wave and controls the oscillation time and motion of the ultrasonic wave, and the operation of X-axis, Y-axis, Z-axis transfer motors 152, 154, and 156 and of a rotating motor 158.

The vibrator 132 of the ultrasonic unit 130 converts ultrasonic electrical energy having the high frequency supplied by the ultrasonic oscillator 120 into the mechanical energy of vertical vibration.

A horn 134 of the ultrasonic unit 130 is configured to obtain amplitude required by the cutting knife 140 when the bread is cut.

The cutting knife 140 transmits the mechanical energy (vibration) generated by the vibrator 132 to the bread so as to cut the bread.

In this case, in consideration of the height of the bread, the cutting knife 140 preferably has length of 30∼60mm, and is coupled to the rotating motor 158, and can cut the bread while rotating in direction of the blade of the cutting knife when cutting the bread.

The ultrasonic unit 130 and the cutting knife 140 can move in X-axis (left and right), Y-axis (forward and backward), and Z-axis (vertically) directions. That is, the ultrasonic unit 130 and the cutting knife 140 can be moved in each of the directions by the X-axis transfer motor 152, the Y-axis transfer motor 154, and the Z-axis transfer motor 156 operated by the control of the control unit 110.

More specifically, an X-axis unit 151 is installed at a side (at a right side in FIG. 2) of a base 102 on which bread is laid such that the X-axis unit 151 moves left and right, and is left and right moved by the X-axis transfer motor 152.

An XY-axis unit 153 is installed at the X-axis unit 151 and at an inner side of the base 102 such that the XY-axis unit 153 moves forward and backward, and is moved forward and backward by the Y-axis transfer motor 154. Accordingly, the XY-axis unit 153 can move left and right and forward and backward.

An XYZ-axis unit 155 is installed at the XY-axis unit 153 and at an inner side of the base 102 such that the XYZ-axis unit 155 moves vertically, and is vertically moved by the Z-axis transfer motor 156. Accordingly, the XYZ-axis unit 155 can move left and right, forward and backward, and vertically.

That is, the ultrasonic unit 130 and the cutting knife 140 are mounted to the XYZ-axis unit 155, and can move in the X-axis (left and right), Y-axis (forward and backward), and Z-axis (vertically) directions.

The cutting knife 140 cuts through the bread on the base 102 by the mechanical vibration with the bread dry by moving vertically while moving left and right or forward and backward.

In this case, the cutting knife 140 is connected to the rotating motor 158 and can cut the bread while rotating in the direction of the blade of the cutting knife 140.

In addition, the distance of the vertical movement of the cutting knife 140 may be adjusted to be 10∼100mm, and as the distance of the vertical movement increases, frequency is constant and the speed of the vertical movement increases, so bread can be cut to have a smooth surface.

## Claims

1. An ultrasonic bread cutter comprising:
an ultrasonic unit configured to convert high-frequency electrical energy into mechanical energy; and
a cutting knife configured to cut bread by transmitting mechanical vibration of the mechanical energy to the bread while passing through the bread.

2. The bread cutter of claim 1, further comprising:
an ultrasonic oscillator configured to convert electrical energy having frequency of 50∼60Hz into high-powered energy having high frequency and supplying the high-powered energy having the high frequency to the ultrasonic unit,
wherein the ultrasonic unit comprises: a vibrator converting the high-frequency electrical energy supplied by the ultrasonic oscillator into a mechanical energy of vertical vibration; and a horn configured to obtain amplitude which the cutting knife requires when cutting the bread.

3. The bread cutter of claim 2, wherein the high frequency of the ultrasonic oscillator is 15∼30KHz, and length of the cutting knife is 30∼60mm.

4. The bread cutter of claim 1, wherein the ultrasonic unit and the cutting knife are mounted to an XYZ-axis unit, and are capable of moving in X-axis (left and right), Y-axis (forward and backward), and Z-axis (vertically) directions, and an X-axis unit is installed at a side of a base on which the bread is laid such that the X-axis unit moves left and right; an XY-axis unit is installed at the X-axis unit such that the XY-axis unit moves forward and backward; and the XYZ-axis unit is installed at the XY-axis unit such that the XYZ-axis unit moves vertically.

5. The bread cutter of claim 4, wherein the cutting knife is coupled to a rotating motor and cuts the bread while rotating in a direction of a blade of the cutting knife.
